# EUROPÄISCHE PATENTSCHRIFT

(11) **EP 3 181 932 B1**
(45) Veröffentlichungstag und Bekanntmachung des Hinweises auf die Patenterteilung: **30.09.2020**
(21) Anmeldenummer: 16160545.6
(22) Anmeldetag: 16.03.2016
(51) Int. Cl.: F16D 13/62, F16D 13/68, F16D 13/70

(54) **KUPPLUNGSANORDNUNG MIT VERBESSERTER MONTAGE**
COUPLING ASSEMBLY WITH IMPROVED ASSEMBLING
SYSTEME DE COUPLAGE A MONTAGE AMELIORE

(30) Priorität: 14.12.2015 DE 102015121705
(43) Veröffentlichungstag der Anmeldung: 21.06.2017
(73) Patentinhaber: KNORR-BREMSE Systeme für Nutzfahrzeuge GmbH, 80809 München (DE)
(72) Erfinder: Amiot, Frederic, 14104 Lisieux Cedex (FR)

(56) Entgegenhaltungen:
- DE-A1- 10 118 233
- DE-A1-102012 102 039
- DE-T2- 69 816 733
- JP-A- 2005 161 422
- US-A- 1 617 717
- US-A- 4 958 712

## Beschreibung

Die vorliegende Erfindung betrifft eine Kupplungsanordnung, insbesondere zum optionalen Verbinden eines Luftverdichters mit einer Antriebseinrichtung, mit einem Eingangselement und mit einem drehfest mit einer Kupplungsglocke verbundenen Ausgangselement, mit einem Kupplungspaket, das innerhalb der Kupplungsglocke zwischen dem Eingangselement und dem Ausgangselement angeordnet ist, und mit einer Federanordnung, welche das Kupplungspaket in einem geschlossenen Zustand beaufschlagt, in dem das Eingangselement und das Ausgangselement drehfest miteinander verbunden sind.

Derartige Kupplungsanordnungen sind bekannt. So ist beispielsweise in der europäischen Patentschrift EP 2 123 929 B1 eine Kopplungsanordnung mit einer topfförmig ausgebildeten Kupplungsglocke beschrieben, an deren innerem Umfang ein Keilnabenprofil angeordnet ist. Keilwellenverbindungen eignen sich zur Herstellung von drehfesten und gleichzeitig axial beweglichen Verbindungen von Kupplungselementen mit der Kupplungsglocke. Neben Keilwellenverbindungen eignen sich auch andere Arten von formschlüssigen Welle-Nabe-Verbindungen wie beispielsweise Zahnwellenverbindungen mit Kerbzahnprofil. Für den Einsatz bei Kupplungsglocken geeigneten Welle-Nabe-Verbindungen ist gemeinsam, dass diese sowohl am Wellenals auch am Nabenelement ein axial verlaufendes Wellen- bzw. Nabenprofil aufweisen, dessen Profilelemente im Einsatz ineinandergreifen und einen Formschluss ausbilden, welcher einer Relativdrehbewegung der Welle gegenüber der Nabe entgegenwirkt. Eine axiale Verschiebung eines mit einem Wellenprofil versehenen Kupplungselements gegenüber einer mit dem entsprechenden Nabenprofil versehenen Kupplungsglocke ist dagegen durch axiale Verschiebung der Profilelemente gegeneinander möglich.

Bei der Montage solcher Kupplungsanordnungen werden mit einem Wellenprofil versehene Bauteile der Kupplung in der Kupplungsglocke angeordnet, indem das Wellenprofil des jeweiligen Bauteils koaxial mit dem Nabenprofil der Kupplungsglocke ausgerichtet und in der entsprechenden Winkelausrichtung axial in Eingriff miteinander gebracht werden, so dass die Bauteile gegenüber der Kupplungsglocke drehfest eingreifen aber axial bewegbar angeordnet sind. Insbesondere bei einer rotationssymmetrischen Gestaltung von Kupplungsglocke und Nabenprofil besteht dabei auch die Gefahr, Bauteile mit unterschiedlichen axialen Funktionsflächen bzw. Gestaltungen in falscher axialer Ausrichtung in der Kupplungsglocke zu montieren, so dass Funktionselemente des Bauteils im montierten Zustand auf die gegenüberliegende Seite des Bauteils gerichtet sind. Durch solche Montagefehler kann es zu Verzögerungen bei der Montage durch eine erforderliche Neuzuordnung oder, sofern die falsche Anordnung nicht erkannt wird, auch zu Beeinträchtigungen der Funktionsfähigkeit der Kupplung kommen.

Eine Kupplungsanordnung gemäß dem Oberbegriff von Anspruch 1 ist aus DE 10 2012 102039 A1 bekannt.

Der Erfindung liegt daher die Aufgabe zugrunde, eine verbesserte Kupplungsanordnung vorzuschlagen, um eine fehlerhafte Ausrichtung der Bauteile bei der Montage der Kupplungsanordnung zu vermeiden.

Dies wird erfindungsgemäß durch die Lehre der unabhängigen Ansprüche erreicht. Zu bevorzugende Weiterbildungen der Erfindung sind Gegenstand der Unteransprüche.

Zur Lösung der Aufgabe wird eine Kupplungsanordnung vorgeschlagen, insbesondere zum optionalen Verbinden eines Luftverdichters mit einer Antriebseinrichtung, mit einem Eingangselement und mit einem drehfest mit einer Kupplungsglocke verbundenen Ausgangselement, mit einem Kupplungspaket, das innerhalb der Kupplungsglocke zwischen dem Eingangselement und dem Ausgangselement angeordnet ist, und mit einer Federanordnung, welche das Kupplungspaket in einem geschlossenen Zustand beaufschlagt, in dem das Eingangselement und das Ausgangselement drehfest miteinander verbunden sind. Die Kupplungsglocke weist einen Hohlzylinder auf, der an seiner inneren Umfangsfläche mit einem Nabenprofil versehenen ist. An einem axialen Endbereich des Hohlzylinders ist eine erste ringförmige Anschlagscheibe angeordnet und an einem von dem axialen Endbereich beabstandeten Bereich ist eine zweite ringförmige Anschlagscheibe angeordnet. Das Nabenprofil des Hohlzylinders weist eine Vielzahl von sich radial nach innen erstreckenden Profilelementen wie insbesondere Zähne oder Keile auf, welche jeweils eine in Umfangsrichtung gleiche erste Breite und gleichen ersten Abstand voneinander aufweisen. Ferner weist das Nabenprofil des Hohlzylinders wenigstens ein Markierungsprofilelement auf, welches in Umfangsrichtung eine von der ersten Breite verschiedene zweite Breite aufweist und welches in Umfangsrichtung einen zweiten Abstand zu einem benachbart dazu angeordneten Profilelement aufweist, der sich von dem ersten Abstand zwischen der Vielzahl von sich radial nach innen erstreckenden Zähnen bzw. Keilen unterscheidet.

Die vorgeschlagene Gestaltung des Nabenprofils der Hohlwelle ermöglicht es, eine fehlerhafte Ausrichtung der in das Nabenprofil der Hohlwelle eingesetzten Bauteile bei der Montage der Kupplungsanordnung zu vermeiden. Die vorgeschlagene unsymmetrische Kombination eines Markierungsprofilelements mit in Umfangsrichtung unterschiedlicher Breite mit einem benachbart dazu angeordneten unterschiedlichen Abstand zum nächsten Profilelement verhindert ein Einsetzen eines mit einem entsprechenden Wellenprofil versehenen Elements in fehlerhafter Ausrichtung in den Hohlzylinder.

Die Kupplungsanordnung weist eine Kupplungsglocke mit einem Hohlzylinder auf, der an seiner inneren Umfangsfläche mit einem Nabenprofil einer formschlüssigen Welle-Nabe-Verbindung versehen ist. Dabei kann der Hohlzylinder neben einem Keilnabenprofil auch ein Zahnnabenprofil oder ein anderes geeignetes Nabenprofil einer formschlüssigen Welle-Nabe-Verbindung aufweisen, deren Formschlusselemente wie insbesondere Keile bzw. Zähne im Rahmen dieser Erfindung als Profilelemente bezeichnet werden. Dabei weisen Welle und Nabe ein axial verlaufendes Wellen- bzw. Nabenprofil auf, dessen Profilelemente im Einsatz ineinandergreifen. Die Profilelemente sind dabei so gestaltet, dass der durch sie ausgebildete Formschluss eine Relativdrehbewegung des Wellenelements gegenüber dem Nabenelement verhindert, eine axiale Bewegung des Wellenelements gegenüber dem entsprechenden Nabenelement jedoch möglich ist.

Die erfindungsgemäße Kupplungsglocke weist einen Hohlzylinder auf. Die Herstellung eines Nabenprofils an einer inneren Umfangsfläche eines Hohlzylinders ist gegenüber der Herstellung einer solchen Struktur an einseitig geschlossenen Kupplungsglocken vereinfacht, da ein Hohlzylinder beidseitig offen ist und damit eine gute Zugänglichkeit für Fertigungswerkzeuge aufweist. So kann zur Herstellung des Nabenprofils beispielsweise auch ein Räumverfahren eingesetzt werden, das in nur einem Arbeitsschritt die Fertigung eines Nabenprofils mit hoher Güte ermöglicht, welches auch eine hohe Tragfähigkeit aufweist. Ferner ist die Geometrie eines mittels Räumen hergestellten Nabenprofils weitgehend flexibel gestaltbar.

In einem axialen Endbereich ist der vorgeschlagene Hohlzylinder so ausgebildet, dass daran eine erste ringförmige Anschlagscheibe anordenbar und in geeigneter Weise fest mit dem Hohlzylinder verbindbar ist. In diesem axialen Bereich stützt sich bei üblichen Bauarten das Kupplungspaket - oder die Federanordnung - am radial nach innen ragenden Abschnitt der Kupplungsglocke ab. Auf der an der Kupplungsglocke außen angeordneten Seite der ersten ringförmigen Anschlagscheibe ist bei üblichen Bauarten eine Betätigungseinrichtung angeordnet. Die erste ringförmige Anschlagscheibe entspricht in ihrer Gestalt und Funktion dem bei bekannten Kupplungsglocken radial nach innen verlaufenden Abschnitt.

An einem von dem axialen Endbereich, an welchem die erste ringförmige Anschlagscheibe angeordnet ist, axial beabstandeten Bereich des Hohlzylinders ist bei der vorgeschlagenen Gestaltung der Kupplungsglocke eine zweite ringförmige Anschlagscheibe angeordnet. Die zweite ringförmige Anschlagscheibe und der Hohlzylinder sind so ausgebildet, dass diese in diesem Bereich fest miteinander verbunden sind. Abhängig von der Gestaltung der Kupplungsanordnung kann diese zweite ringförmige Anschlagscheibe im zweiten axialen Endbereich der Hohlwelle angeordnet sein. Die zweite ringförmige Anschlagscheibe kann aber auch in einem gegenüber der axialen Länge des Hohlzylinders kürzerem Abstand von der ersten ringförmigen Anschlagscheibe angeordnet sein. Die zweite ringförmige Anschlagscheibe ist dabei insbesondere am inneren Umfang des Hohlzylinders angeordnet.

Eine solche zweite ringförmige Anschlagscheibe dient bei üblichen Bauformen zur axialen Abstützung des Kupplungspakets gegenüber der Kupplungsglocke oder zur Abstützung einer Federanordnung gegenüber der Kupplungsglocke. Die zweite ringförmige Anschlagscheibe kann beispielsweise formschlüssig mittels im Bereich der inneren Umfangsfläche des Hohlzylinders angeordneten Halteeinrichtungen wie einem Sicherungsring oder einer Verstiftung gehalten sein. Bei einer Ausführungsform weist die zweite ringförmige Anschlagscheibe an ihrer äußeren Umfangsfläche ein Wellenprofil auf, das in das Nabenprofil des Hohlzylinders eingreift.

Das Nabenprofil des Hohlzylinders weist eine Vielzahl von sich radial nach innen erstreckenden Profilelementen wie insbesondere Zähne oder Keile auf, welche jeweils eine in Umfangsrichtung gleiche erste Breite und gleichen ersten Abstand voneinander aufweisen. Über den Umfang ist der Hohlzylinder damit zumindest teilweise mit einem Nabenprofil versehen, wobei die Abmessungen der Profilelemente so gewählt ist, dass das Nabenprofil für die Übertragung des für die Funktionsfähigkeit der Kupplungsanordnung erforderlichen Drehmoments ausgelegt ist.

Das Nabenprofil des Hohlzylinders weist ferner wenigstens ein Markierungsprofilelement auf, das in Umfangsrichtung eine zweite Breite aufweist. Die zweite Breite unterscheidet sich von der ersten Breite der Vielzahl der zuvor beschriebenen Profilelemente des Nabenprofils. Damit ist ein formschlüssiges Ineinandergreifen mit Profilelementen eines Wellenprofils, die mit der Vielzahl der zuvor beschriebenen Profilelemente eingreifen, nicht möglich.

Das wenigstens eine Markierungsprofilelement weist in Umfangsrichtung einen zweiten Abstand zu einem benachbart dazu angeordneten Profilelement auf, der sich von dem ersten Abstand zwischen der Vielzahl von sich radial nach innen erstreckenden Profilelementen unterscheidet. Auch der unterschiedliche Abstand des Markierungsprofilelements zu dem dazu benachbarten Profilelement verhindert ein formschlüssiges Ineinandergreifen mit zwei Profilelementen eines Wellenprofils, die so ausgebildet sind, dass sie mit der Vielzahl der zuvor beschriebenen Profilelemente eingreifen.

Am Umfang des Hohlzylinders der vorgeschlagenen Kupplungsanordnung ist folglich ein Nabenprofil mit einer Vielzahl von sich radial nach innen erstreckenden Profilelementen angeordnet, wobei insbesondere die Mehrheit der Profilelemente dieses Nabenprofils in Umgangsrichtung jeweils einen ersten Abstand zueinander aufweisen und damit gleichmäßig voneinander beabstandet sind. Wenigstens ein Markierungsprofilelement und ein dazu benachbarter Abstand zum nächsten Profilelement des Nabenprofils weisen in Umgangsrichtung eine hierzu unterschiedliche Breite bzw. Abstand auf, als die Vielzahl der am Hohlzylinder angeordneten Profileelemente bzw. die Abstände dazwischen, so dass das Nabenprofil des Hohlzylinders nicht spiegelsymmetrisch ausgestaltet ist. Mit dieser Gestaltung kann ein um die Drehachse verdrehtes und/ oder ein axial um 180° verschwenktes Einsetzen eines Bauteils in den Hohlzylinder verhindert werden, das ein diesem Nabenprofil entsprechendes nicht spiegelsymmetrisch ausgebildetes Wellenprofil aufweist, welches in der vorgesehenen Montagelage in das Nabenprofil einsetzbar und dort drehfest aber axial beweglich anordenbar ist.

Bei einer Ausführungsform der Kupplungsanordnung ist die zweite Breite größer als die erste Breite und der erste Abstand ist kleiner als der zweite Abstand, oder die zweite Breite ist kleiner als die erste Breite und der erste Abstand ist größer als der zweite Abstand. Bei einer Kombination, bei welcher die zweite Breite und der zweite Abstand jeweils entweder größer oder kleiner sind, als die erste Breite und der erste Abstand, ist eine nicht spiegelsymmetrische Gestaltung des Nabenprofils durch "Verschieben" der Position einer Profilelementflanke am Umfang möglich. Das Profilelement mit "verschobener" Flanke wird somit zum Markierungsprofilelement. So kann das Nabenprofil der Welle-Nabenverbindung beispielsweise mit gängigen und insbesondere genormten Abmessungen ausgelegt werden und nur in der Anordnung einer Profilelementflanke in Umfangsrichtung verändert sein.

Ebenso ist es natürlich auch möglich, die zweite Breite und den zweiten Abstand dadurch zu verändern, dass sich das Markierungsprofilelement beispielsweise fast oder etwas mehr als über die Breite von zwei Profilelementen einschließlich des Abstands dazwischen erstreckt, oder der zweite Abstand sich über fast oder etwas mehr als zwei Abstände mit dazwischen fehlendem Profilelement erstreckt. Natürlich sind auch andere Gestaltungsmöglichkeiten im Rahmen der Erfindung möglich.

Bei einer anderen Ausführungsform der Kupplungsanordnung ist die zweite Breite größer als die erste Breite und der erste Abstand größer als der zweite Abstand, oder die zweite Breite ist kleiner als die erste Breite und der erste Abstand ist kleiner als der zweite Abstand. Auch bei solchen Ausführungsformen ist es möglich, das Markierungsprofilelement und den daneben angeordneten Abstand beispielsweise so anzupassen, dass das Nabenprofil einer Welle-Nabenverbindung mit gängigen und insbesondere genormten Abmessungen ausgelegt werden kann und dessen Geometrie nur im Bereich des Markierungsprofilelements und des daneben angeordneten Abstands beispielsweise durch Verschieben von Flanken insbesondere in Verbindung mit einem Zusammenfassen von Profilelementen und/ oder Abständen so zu verändern, dass das Nabenprofil eine geeignete nicht spiegelsymmetrische Gestalt aufweist.

Bei einer Ausführungsform der Kupplungsanordnung weist das Nabenprofil des Hohlzylinders zwei Markierungsprofilelemente mit in Umfangsrichtung zweiter Breite und zweitem Abstand zu einem jeweils in gleicher Umfangsrichtung benachbart dazu angeordneten Profilelement auf. Die beiden Markierungsprofilelemente sind dabei in einem Bereich von 90° bis 240°, insbesondere um 180° zueinander versetzt am Umfang des Hohlzylinders angeordnet. Dadurch, dass der zweite Abstand zwischen dem Markierungsprofilelement und einem jeweils in gleicher Umfangsrichtung benachbart dazu angeordnetem Profilelement jeweils in gleicher Umfangsrichtung zum Markierungsprofilelement angeordnet ist, ergibt sich auch bei einem Versatz um 180° keine spiegelsymmetrische Gestaltung des Nabenprofils. Eine Ausführungsform mit zwei Markierungsprofilelementen erleichtert das Zuordnen der Winkelposition des Wellenprofils zum Nabenprofil. Zudem wird ein Verklemmen des Wellenprofils im Nabenprofil erschwert, da ein verkantetes Einsetzen des Wellenprofils durch den fehlenden Formschluss an zwei Umfangspositionen verhindert wird. Ein Versatz von 180° zwischen den Markierungsprofilelementen ermöglicht ferner ein Einsetzen des Wellenprofils in das Nabenprofil in zwei Winkelpositionen.

Bei einer Ausführungsform der Kupplungsanordnung weist die erste ringförmige Anschlagscheibe an ihrem äußeren Umfang ein Wellenprofil mit einer Vielzahl von sich radial nach außen erstreckenden Profilelementen wie insbesondere Zähne oder Keile auf, welche jeweils eine in Umfangsrichtung gleiche dritte Breite und gleichen dritten Abstand voneinander aufweisen. Das Wellenprofil weist wenigstens ein Markierungsprofilelement auf, welches in Umfangsrichtung eine von der dritten Breite verschiedene vierte Breite aufweist und in Umfangsrichtung einen vierten Abstand zu einem benachbart dazu angeordneten Profilelement aufweist, der sich von dem dritten Abstand zwischen der Vielzahl von sich radial nach außen erstreckenden Profilelementen unterscheidet. Bei einem Eingriff des Wellenprofils in das Nabenprofil des Hohlzylinders ist die erste ringförmige Anschlagscheibe im Hohlzylinder axial bewegbar angeordnet.

Das am Umfang der ersten ringförmigen Anschlagscheibe angeordnete Wellenprofil ist dabei so ausgeführt, dass beim Eingriff des Wellenprofils der Anschlagscheibe mit dem Nabenprofil des Hohlzylinders die radial nach außen ragenden Profilelemente an der Anschlagscheibe in die am Nabenprofil des Hohlzylinders angeordneten Abstände eingreifen, und das wenigstens eine Markierungsprofilelement des Wellenprofils in den benachbart zum Markierungsprofilelement des Nabenprofils angeordneten Abstand. Ferner greift das wenigstens eine Markierungsprofilelement der Anschlagscheibe am Nabenprofil in den Abstand ein, der benachbart zum Markierungsprofilelement des Nabenprofils angeordnet ist und sich von den Abständen der Vielzahl von Profilelementen am Nabenprofil unterscheidet. Diese Gestaltung von Nabenprofil des Hohlzylinders und Wellenprofil der Anschlagscheibe ermöglicht die Herstellung einer insbesondere formschlüssigen Verbindung zwischen Hohlzylinder und erster ringförmiger Anschlagscheibe um die Drehachse der Kupplungsanordnung.

Entsprechend der Ausgestaltung des Nabenprofils des Hohlzylinders, zu welchem das Wellenprofil der ersten ringförmigen Anschlagscheibe passend ausgestaltet ist, kann bei dieser Ausführungsform die vierte Breite kleiner sein als die dritte Breite, wobei der dritte Abstand dann größer ist als der vierte Abstand, oder die vierte Breite kann größer sein als die dritte Breite, wobei der dritte Abstand dann kleiner ist als der vierte Abstand. In gleicher Weise kann entsprechend der Ausgestaltung des Nabenprofils des Hohlzylinders beim Wellenprofil der ersten ringförmigen Anschlagscheibe die vierte Breite kleiner sein als die dritte Breite, wobei der dritte Abstand dann kleiner ist als der vierte Abstand, oder die vierte Breite ist größer als die dritte Breite, wobei der dritte Abstand dann größer ist als der vierte Abstand.

Die beschriebene Gestaltung des Wellenprofils am Umfang bzw. an der Umfangsfläche der ersten ringförmigen Anschlagscheibe verhindert ein axial verkehrtes Einsetzen der ersten ringförmigen Anschlagscheibe in den Hohlzylinder der Kupplungsglocke. Auf diese Weise kann verhindert werden, dass die erste ringförmige Anschlagscheibe in falscher axialer Richtung in die Kupplungsglocke eingesetzt wird. Insbesondere falls eine axiale Seite der Anschlagscheibe beispielsweise einen Abstützbereich für eine Federanordnung und/ oder ein oder mehrere weitere Funktionselemente aufweist, führt ein falsches Einsetzen der ersten ringförmigen Anschlagscheibe zu einem Funktionsverlust der Kupplungsanordnung, welcher durch die erfindungsgemäße Gestaltung der Kupplungsanordnung bei der Montage der Kupplungsanordnung verhindert wird.

Bei einer Ausführungsform der Kupplungsanordnung weist der Hohlzylinder an dem einen axialen Endbereich eine in Umfangsrichtung verlaufende Nut auf, deren Breite wenigstens der axialen Breite des Wellenprofils der ersten ringförmigen Anschlagscheibe entspricht und deren Außendurchmesser wenigstens dem Außendurchmesser der ersten ringförmigen Anschlagscheibe entspricht, so dass die erste ringförmige Anschlagscheibe in dieser Nut um die Drehachse der Kupplungsanordnung gegenüber dem Hohlzylinder drehbar ist. Mit dieser Gestaltung kann eine wie vorbeschrieben axial im Hohlzylinder bewegbare Anschlagscheibe, deren Wellenprofil in das Nabenprofil des Hohlzylinders eingreift, in axialer Richtung innerhalb des Hohlzylinders in die Nut bewegt werden, welche das Nabenprofil unterbricht. Im Bereich der Nut ist damit der Eingriff zwischen den Profilelementen des Wellenprofils und den Profilelementen des Nabenprofils aufgehoben, so dass die erste ringförmige Anschlagscheibe innerhalb der Nut um die Drehachse der Kupplungsanordnung drehbar ist. Dabei ist insbesondere eine Verdrehung der Anschlagscheibe in einem Winkelbereich vorgesehen, in welchem die am Umfang der Anschlagscheibe angeordneten Profilelemente mit den im Bereich der Nut unterbrochenen Profilelementen des Nabenprofils des Hohlzylinders ausgerichtet angeordnet sind. In dieser Position ist die erste ringförmige Anschlagscheibe insbesondere gesichert gegen eine axiale Bewegung gegenüber dem Hohlzylinder angeordnet.

Diese Ausführungsform der Kupplungsanordnung weist ferner wenigstens ein Befestigungsmittel auf, mit welchem die erste ringförmige Anschlagscheibe drehfest in der in Umfangsrichtung verlaufenden Nut im Hohlzylinder befestigbar ist. Ein hierfür geeignetes Befestigungsmittel stellt beispielsweise eine formschlüssige Verbindung zwischen einem Profilelement der ersten ringförmigen Anschlagscheibe mit einem Profilelement des Hohlzylinders her, insbesondere in axialer Richtung der Kupplungsanordnung. Zu diesem Zweck kann insbesondere ein Profilelement der Anschlagscheibe und/ oder ein Profilelement des Hohlzylinders eine zum Ausbilden eines Formschlusses mit einem Befestigungsmittel wie einer Verstiftung oder Verschraubung geeignete Gestaltung wie beispielsweise eine Bohrung oder Ausnehmung aufweisen. Zur drehfesten Befestigung der Anschlagscheibe im Hohlzylinder kann jedoch auch jedes geeignete anders ausgebildete Befestigungsmittel Verwendung finden.

Bei einer Ausführungsform der Kupplungsanordnung weist das Ausgangselement an seinem äußeren Umfang ein Wellenprofil mit einer Vielzahl von sich radial nach außen erstreckenden Profilelementen wie insbesondere Zähne oder Keile auf, welche jeweils eine in Umfangsrichtung gleiche dritte Breite und gleichen dritten Abstand voneinander aufweisen. Das Wellenprofil weist wenigstens ein Markierungsprofilelement auf, welches in Umfangsrichtung eine von der dritten Breite unterschiedliche vierte Breite aufweist und in Umfangsrichtung einen vierten Abstand zu einem benachbart dazu angeordneten Profilelement aufweist, der sich von dem dritten Abstand zwischen der Vielzahl von sich radial nach außen erstreckenden Profilelementen unterscheidet. Bei einem Eingriff des Wellenprofils in das Nabenprofil ist das Ausgangselement im Hohlzylinder drehfest und axial bewegbar angeordnet.

Das am Umfang des Ausgangselements angeordnete Wellenprofil ist dabei so ausgeführt, dass beim Eingriff des Wellenprofils des Ausgangselements mit dem Nabenprofil des Hohlzylinders die radial nach außen ragenden Profilelemente am Ausgangselement in die am Nabenprofil des Hohlzylinders angeordneten Abstände eingreifen, wobei das wenigstens eine Markierungsprofilelement des Wellenprofils im benachbart zum Markierungsprofilelement des Nabenprofils angeordneten insbesondere zweiten Abstand am Nabenprofil eingreift. Ferner greift das wenigstens eine Markierungsprofilelement des Nabenprofils in den insbesondere vierten Abstand des Wellenprofils am Ausgangselement ein, der benachbart zum Markierungsprofilelement des Ausgangselements angeordnet ist und sich von den Abständen der Vielzahl von Profilelementen am Ausgangselement unterscheidet. Diese Gestaltung von Nabenprofil am Hohlzylinder und Wellenprofil am Ausgangselement ermöglicht die Herstellung einer formschlüssigen Verbindung zwischen Hohlzylinder und Ausgangselement insbesondere bezogen auf die Drehachse der Kupplungsanordnung, mit welcher das Ausgangselement drehfest aber axial bewegbar innerhalb des Hohlzylinders angeordnet ist.

Entsprechend der Ausgestaltung des Nabenprofils des Hohlzylinders, zu welchem das Wellenprofil des Ausgangselements passend ausgestaltet ist, kann bei dieser Ausführungsform die vierte Breite kleiner sein als die dritte Breite, wobei der dritte Abstand dann größer ist als der vierte Abstand, oder die vierte Breite kann größer sein als die dritte Breite, wobei der dritte Abstand dann kleiner ist als der vierte Abstand. In gleicher Weise kann entsprechend der Ausgestaltung des Nabenprofils des Hohlzylinders beim Wellenprofil der ersten ringförmigen Anschlagscheibe die vierte Breite kleiner sein als die dritte Breite, wobei der dritte Abstand dann kleiner ist als der vierte Abstand, oder die vierte Breite ist größer als die dritte Breite, wobei der dritte Abstand dann größer ist als der vierte Abstand.

Die beschriebene Gestaltung des Wellenprofils am Umgang bzw. an der Umfangsfläche des Ausgangselements verhindert analog zum Wellenprofil an der ersten ringförmigen Anschlagscheibe eine falsche Anordnung des Ausgangselements bei deren Montage im Hohlzylinder der Kupplungsglocke. Auf diese Weise kann ein richtiges Einsetzen des Ausgangselements in die Kupplungsglocke gewährleistet werden.

Bei einer Ausführungsform der Kupplungsanordnung weist wenigstens ein Reibelement der zweiten Gruppe von Reibelementen an seinem äußeren Umfang ein Wellenprofil mit einer Vielzahl von sich radial nach außen erstreckenden Profilelementen wie insbesondere Zähne oder Keile auf, welche jeweils eine in Umfangsrichtung gleiche dritte Breite und gleichen dritten Abstand voneinander aufweisen. Das Wellenprofil weist dabei wenigstens ein Markierungsprofilelement auf, welches in Umfangsrichtung eine von der dritten Breite unterschiedliche vierte Breite aufweist und welches in beiden Umfangsrichtungen einen vierten Abstand vom jeweils nächsten Profilelement aufweist, der sich von dem dritten Abstand zwischen der Vielzahl von sich radial nach außen erstreckenden Profilelementen unterscheidet. Bei einem Eingriff des Wellenprofils in das Nabenprofil ist ein Reibelement der zweiten Gruppe von Reibelementen im Hohlzylinder drehfest und axial bewegbar angeordnet.

Die beschriebene Ausführung des Wellenprofils an einem Reibelement der zweiten Gruppe von Reibelementen ermöglicht durch deren spiegelbildliche Gestaltung eine von der axialen Ausrichtung unabhängige Anordnung des Reibelements im Hohlzylinder der Kupplungsglocke. Auf diese Weise kann ein beispielsweise beidseitig in gleicher Weise mit Reibbelägen versehenes Reibelement in jeder axialen Ausrichtung in die Kupplungsglocke eingesetzt werden.

Das am Umfang eines Reibelements der zweiten Gruppe von Reibelementen angeordnete Wellenprofil ist um die Mittelebene des wenigstens einen Markierungselements spiegelbildlich ausgeführt. Sofern das Nabenprofil des Hohlzylinders zwei Markierungsprofilelemente aufweist, welche um einen anderen Winkel als 180° am Umfang versetzt angeordnet sind, ist es für eine um die Mittelebene eines Markierungselements spiegelbildliche Ausführung erforderlich, zwei zusätzliche entsprechend positionierte Markierungselemente mit entsprechend daneben angeordneten vierten Abständen vorzusehen.

Bei einem Eingriff des Wellenprofils eines Reibelements mit dem Nabenprofil des Hohlzylinders greifen die radial nach außen ragenden Profilelemente am Ausgangselement in die am Nabenprofil des Hohlzylinders angeordneten Abstände ein, wobei das wenigstens eine Markierungsprofilelement des Wellenprofils in den benachbart zum Markierungsprofilelement des Nabenprofils angeordneten insbesondere zweiten Abstand am Nabenprofil eingreift. Ferner greift das wenigstens eine Markierungsprofilelement des Nabenprofils in einen der benachbart zum Markierungselement angeordneten vierten Abstände des Wellenprofils am Reibelement ein. Diese Gestaltung des Nabenprofils am Hohlzylinder und des Wellenprofils am Reibelement ermöglicht die Herstellung einer formschlüssigen Verbindung zwischen Hohlzylinder und Reibelement insbesondere bezogen auf die Drehachse der Kupplungsanordnung, mit welcher ein Reibelement der zweiten Gruppe von Reibelementen drehfest aber axial bewegbar innerhalb des Hohlzylinders angeordnet ist.

Entsprechend der Ausgestaltung des Nabenprofils des Hohlzylinders, zu welchem das Wellenprofil eines Reibelements der zweiten Gruppe von Reibelementen passend ausgebildet ist, kann bei dieser Ausführungsform die vierte Breite kleiner sein als die dritte Breite, wobei der dritte Abstand dann größer ist als der vierte Abstand, oder die vierte Breite kann größer sein als die dritte Breite, wobei der dritte Abstand dann kleiner ist als der vierte Abstand. In gleicher Weise kann entsprechend der Ausgestaltung des Nabenprofils des Hohlzylinders beim Wellenprofil eines Reibelements die vierte Breite kleiner sein als die dritte Breite, wobei der dritte Abstand dann kleiner ist als der vierte Abstand, oder die vierte Breite größer ist als die dritte Breite, wobei der dritte Abstand dann größer ist als der vierte Abstand.

Bei einer Ausführungsform der Kupplungsanordnung entspricht der vierte Abstand des Wellenprofils einer mit dem Nabenprofil des Hohlzylinders ausgebildeten Welle-Nabe-Verbindung dem Summenwert von zwei ersten Breiten und einem ersten Abstand des Nabenprofils des Hohlzylinders. Ein entsprechend diesem Summenwert ausgebildeter Abstand an einem Wellenprofil, das zum Eingreifen mit diesem Nabenprofil ausgebildet ist, liegt folglich mit seinen den Abstand beidseits begrenzenden Flanken formschlüssig an den beiden äußeren Flanken von zwei Profilelementen mit jeweils erster Breite und dazwischen angeordnetem ersten Abstand an.

Bei einer Ausführungsform der Kupplungsanordnung weist die erste ringförmige Anschlagscheibe an ihren beiden axialen Seiten unterschiedliche Funktionselemente auf. Um eine Montage mit richtiger Ausrichtung der ersten ringförmigen Anschlagscheibe zu gewährleisten, weist die erste ringförmige Anschlagscheibe ein Wellenprofil gemäß dem Wellenprofil auf, das für das Ausgangselement beschrieben worden ist.

Bei einer anderen Ausführungsform der Kupplungsanordnung weist die erste ringförmige Anschlagscheibe an ihren beiden axialen Seiten gleiche Funktionselemente auf. Damit kann die erste ringförmige Anschlagscheibe in jeder Ausrichtung montiert werden, ohne dass Funktionselemente in falscher axialer Ausrichtung angeordnet sind. In diesem Fall kann die erste ringförmige Anschlagscheibe mit einem Wellenprofil versehen sein, wie es für ein Reibelement der zweiten Gruppe von Reibelementen beschrieben worden ist.

Obwohl die Breite der Profilelemente der an der ersten ringförmigen Anschlagscheibe, am Ausgangselement und an den Reibelementen der ersten Gruppe von Reibelementen angeordneten Wellenprofile als dritte und vierte Breite sowie der jeweilige Abstand zwischen den Profilelementen als dritter und vierter Abstand bezeichnet werden, kann bei einer Ausführungsform der Kupplungsanordnung eine Abweichung zwischen den an der ersten ringförmigen Anschlagscheibe und am Ausgangselement bzw. den Reibelementen verwirklichten dritten und vierten Breite sowie dem dritten und vierten Abstand vorliegen. Dies ist insbesondere deshalb möglich, da über die Welle-Nabe-Verbindung zwischen der ersten ringförmigen Anschlagscheibe und dem Hohlzylinder keine Drehmomente übertragen werden. In diesem Zusammenhang wird darauf hingewiesen, dass die jeweiligen Breiten und Abstände der Profilelemente, auf welche in der Beschreibung der Erfindung Bezug genommen wird, in einer geeigneten Weise abhängig von der Gestaltung des Querschnitts der Profilelemente - insbesondere entsprechend deren üblicher Bemaßung - zu verstehen sind.

Weitere Vorteile, Merkmale und Anwendungsmöglichkeiten der vorliegenden Erfindung ergeben sich aus der nachfolgenden Beschreibung im Zusammenhang mit den Figuren.
- Fig. 1: zeigt eine Schnittdarstellung einer beispielhaften Ausführungsform einer erfindungsgemäßen Kupplungsanordnung in der eingerückten Position;
- Fig. 2a: zeigt ein beispielhaftes Ausgangselement, das formschlüssig in einem Hohlzylinder der Kupplungsanordnung aus Fig. 1 angeordnet ist;
- Fig. 2b: zeigt die Wirkung der erfindungsgemäßen Welle-Nabe-Verbindung bei einer fehlerhaften Montage der Elemente aus Fig. 2a;
- Fig. 2c: zeigt ein Detail der fehlerhaften Montage der Elemente aus Fig. 2b;
- Fig. 3a: zeigt eine beispielhafte erste ringförmige Anschlagscheibe vor deren Montage in den Hohlzylinder der Kupplungsanordnung aus Fig. 1;
- Fig. 3b: zeigt die beispielhafte erste ringförmige Anschlagscheibe aus Fig. 3a, welche in den Hohlzylinder eingesetzt ist;
- Fig. 3c: zeigt die beispielhafte erste ringförmige Anschlagscheibe aus Fig. 3a und 3b, welche in der Nut im Hohlzylinder befestigt ist;
- Fig. 4a: zeigt ein beispielhaftes Reibelement der zweiten Gruppe von Reibelementen vor dessen Montage in den Hohlzylinder der Kupplungsanordnung aus Fig. 1; und
- Fig. 4b: zeigt das beispielhafte Reibelement aus Fig. 4a, welches in den Hohlzylinder eingesetzt ist.

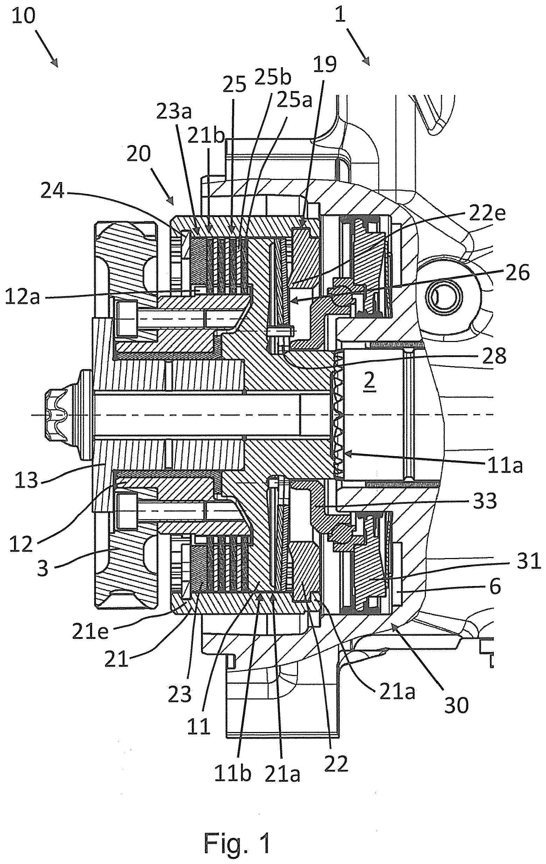

**Fig. 1** zeigt eine beispielhafte Ausführungsform einer erfindungsgemäßen Kupplungsanordnung 10, welche im Ausführungsbeispiel an einem Luftverdichter 1 angeordnet ist. Das Ausgangselement 11 der Kupplungsanordnung 10 ist dabei über eine Stirnverzahnung 11a mit einer Eingangswelle 2 des Luftverdichters 1 verbunden. Das Eingangselement 12 der Kupplungsanordnung 10 ist über ein Antriebsrad 3 mit einer nicht gezeigten Antriebseinrichtung verbunden und auf einer Nabe 13 frei um die Drehachse der Kupplung drehbar gelagert.

Das Ausgangselement 11 ist über eine Welle-Nabe-Verbindung drehfest aber axial beweglich mit der Kupplungsglocke 20 verbunden. Dazu weist das Ausgangselement 11 an seinem äußeren Durchmesser ein Keilwellenprofil 11b mit Profilelementen 11c in Form von sich radial nach außen erstreckenden Keilen 11c auf, welche in ein an der Kupplungsglocke 20 angeordnetes Keilnabenprofil 21b mit Profilelementen 21c ebenfalls in Form von Keilen 21c eingreifen, welche vom inneren Durchmesser der Kupplungsglocke 20 aus radial nach innen ragen. Die Kupplungsglocke 20 weist einen Hohlzylinder 21 auf, an dessen innerer Umfangsfläche das Keilnabenprofil 21b ausgebildet ist. An dem axialen Endbereich 21a, welcher bei der beispielhaften Ausführungsform benachbart zum Luftverdichter 1 angeordnet ist, ist in einer umlaufend im Hohlzylinder 21 ausgebildeten Nut 19 eine erste ringförmige Anschlagscheibe 22 angeordnet, welche fest mit dem Hohlzylinder 21 verbunden ist. Eine zweite ringförmige Anschlagscheibe 23 ist in einem von dem axialen Endbereich 21a beabstandeten Bereich 21e angeordnet. An ihrer äußeren Umfangsfläche weist die zweite ringförmige Anschlagscheibe 23 ein Keilwellenprofil 23a auf, welches in das Keilnabenprofil 21b des Hohlzylinders 21 eingreift und somit drehfest mit dem Hohlzylinder 21 verbunden ist. Eine axiale Bewegung der zweiten ringförmigen Anschlagscheibe 23 in einer Richtung weg von der ersten ringförmigen Anschlagscheibe 22 wird durch einen in einer umlaufenden Nut im Hohlzylinder 21 angeordneten Sicherungsring 24 verhindert.

Sowohl die zweite ringförmige Anschlagscheibe 23 als auch die Ringfläche am Ausgangselement 11, welche der Anschlagscheibe 23 gegenüber liegt, sind so ausgebildet, dass sie eine große Kontaktfläche mit dem dazwischen angeordneten Kupplungspaket 25 aufweisen, um den Kraftfluss der Kupplungsanordnung 20 in einer eingerückten Position zu übertragen. Das Kupplungspaket 25 weist eine erste Gruppe von Reibelementen 25a auf, welche ringförmig ausgebildet sind und an ihrem inneren Durchmesser ein Keilnabenprofil aufweisen, welches in ein an der äußeren Umfangsfläche des Eingangselements 12 ausgebildetes Keilwellenprofil 12a eingreift.

Die zweite Gruppe von Reibelementen 25b ist ebenfalls ringförmig ausgebildet und abwechselnd mit den Elementen der ersten Gruppe von Reibelementen 25a innerhalb der Kupplungsglocke 20 angeordnet. Die zweite Gruppe von Reibelementen 25b weist jeweils an ihrem äußeren Durchmesser ein Keilwellenprofil 25c mit Profilelementen 25d in Form von sich radial nach außen erstreckenden Keilen 25d auf, welches in das am Hohlzylinder 21 der Kupplungsglocke 20 ausgebildete Keilnabenprofil 21b eingreift.

Insbesondere die axialen Oberflächen der ersten und zweiten Gruppe von Reibelementen 25a, 25b sind so ausgebildet, dass zwischen diesen bei einer axialen Beaufschlagung des Kupplungspakets 25 ein Reibschluss entsteht. Werden die Reibelemente 25a, 25b, welche zwischen der zweiten ringförmigen Anschlagscheibe 23 und dem Ausgangselement 11 angeordnet sind, in einer axialen Richtung mit einer Kraft beaufschlagt, werden diese mittels deren axial beweglichen Anordnung innerhalb der Kupplungsglocke aneinandergepresst und aufgrund der dazwischen wirkenden Reibkräfte drehfest miteinander verbunden. Die Reibelemente 25a, 25b übertragen folglich ein am Eingangselement 12 wirkendes Drehmoment auf den Hohlzylinder 21 der Kupplungsglocke 20 und auch auf das Ausgangselement 11. Auf diese Weise wird ein über das Antriebsrad 3 auf das Eingangselement 12 übertragenes Drehmoment über das Ausgangselement 11 auf die Eingangswelle 2 des Luftverdichters 1 übertragen und dieser somit angetrieben.

Die Beaufschlagung des Kupplungspakets 25 mit einer axial gerichteten Kraft erfolgt mit Hilfe einer Federanordnung 26, welche axial zwischen der ersten ringförmigen Anschlagscheibe 22 und dem Ausgangselement 11 angeordnet ist und mehrere an ihrem inneren Durchmesser angeordnete Finger 28 aufweist. Etwa radial in der Mitte des ringförmigen Bereichs der Federanordnung 26 ist diese an einem an der ersten ringförmigen Anschlagscheibe 22 ausgebildeten Abstützbereich 22e gelagert. In der dargestellten eingerückten Position der Kupplungsanordnung 10 beaufschlagt die Federanordnung 26 das Ausgangselement 11 mit einer axialen Einrückkraft und stützt sich dabei am Abstützbereich 22e an der zweiten ringförmigen Anschlagscheibe 22 ab.

Im Gehäuse des Luftverdichters 1 ist radial um den Endbereich der Eingangswelle 2 ein Ringzylinder 6 ausgebildet, in welchem ein Betätigungskolben 31 der Betätigungseinrichtung 30 angeordnet ist. Durch eine aus einem Druck im Ringzylinder 6 resultierende Betätigungskraft wird der Ringkolben 31 axial in Richtung zum Kupplungspaket 25 hin beaufschlagt, wodurch das Betätigungselement 33 gegen die Finger 28 der Federanordnung 26 drückt. Dadurch wird die Federanordnung 26 um den Abstützbereich 22e an der ersten ringförmigen Anschlagscheibe 22 verschwenkt, so dass sich das Ausgangselement 11 sowie die Reibelemente der beiden Gruppen von Reibelementen 25a und 25b entlang der Profilelemente der jeweiligen Welle-Nabe-Verbindungen axial voneinander entfernen können, womit die Reibwirkung zwischen den Reibelementen 25a, 25b aufgehoben wird.

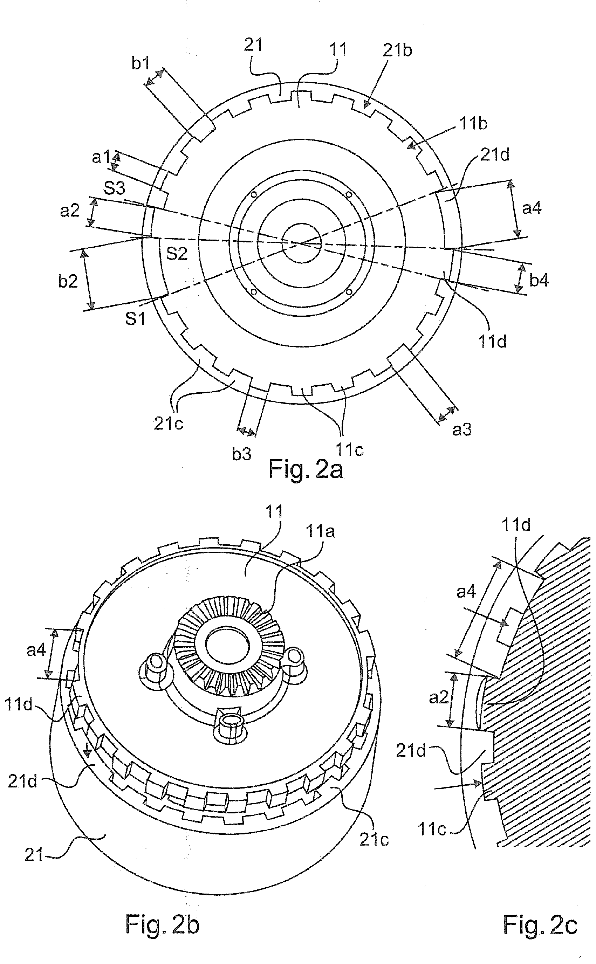

**Fig. 2a** zeigt ein beispielhaftes Ausgangselement 11, das formschlüssig in einem Hohlzylinder 21 der Kupplungsglocke 29 der Kupplungsanordnung 10 aus Fig. 1 angeordnet ist. An seiner inneren Umfangsfläche ist der Hohlzylinder 21 mit einem Nabenprofil 21b versehenen, welches eine Vielzahl (hier 18) von sich radial nach innen erstreckenden Profilelemente 21c aufweist, die bei der beispielhaften Ausführungsform als Keile 21c ausgebildet sind. Die Vielzahl der Profilelemente 21c weisen in Umfangsrichtung eine gleiche erste Breite b1 und gleichen ersten Abstand a1 voneinander auf. Das Nabenprofil 21b des Hohlzylinders 21 weist ferner zwei um 180° zueinander versetzt angeordnete Markierungsprofilelemente 21d auf, welche in Umfangsrichtung eine zweite Breite b2 aufweisen, welche größer ist als die erste Breite b1. Zu einem in jeweils gleicher Umfangsrichtung (in der gezeigten Ansicht im Uhrzeigersinn) benachbart dazu angeordneten Profilelement 21c weist jedes der Markierungsprofilelemente 21d einen zweiten Abstand a2 in Umfangsrichtung auf, der größer ist, als der erste Abstand a1 in Umfangsrichtung zwischen jeweils zwei der Vielzahl der Profilelemente 21c.

Das innerhalb des Hohlzylinders 21 angeordnete Ausgangselement 11 weist an seinem äußeren Umfang ein Keilwellenprofil 11b mit einer Vielzahl (hier 18) von sich radial nach außen erstreckenden Profilelementen 11c auf. Bei der beispielhaften Ausführungsform sind die Profilelemente 11c als Keile 11c ausgebildet. Die Vielzahl der Profilelemente 11c weisen in Umfangsrichtung eine jeweils gleiche dritte Breite b3 und gleichen dritten Abstand a3 voneinander auf. Auch am Ausgangselement 11 sind zwei um 180° zueinander versetzt angeordnete Markierungsprofilelemente 11d angeordnet, welche in Umfangsrichtung eine gegenüber der dritten Breite b3 größere vierte Breite b4 aufweisen und zu einem in jeweils gleicher Umfangsrichtung (in der gezeigten Ansicht gegen den Uhrzeigersinn) benachbart dazu angeordneten Profilelement 11c einen vierten Abstand a4 aufweist, der größer ist als der jeweils dritte Abstand a3 zwischen (zwei) der Vielzahl von sich radial nach außen erstreckenden Profilelementen 11c.

In Fig. 2a ist das Ausgangselement 11 in der vorgesehenen axialen Montagelage im Hohlzylinder 21 angeordnet. Durch den zwischen den Profilelementen 11c, 11d des Keilwellenprofils 11b und den Profilelementen 21c, 21d des Keilnabenprofils 21b ausgebildeten Formschluss sind das Ausgangselement 11 und der Hohlzylinder 21 axial relativ zueinander bewegbar angeordnet. Eine Verdrehung zwischen dem Ausgangselement 11 und dem Hohlzylinder 21 um die Drehachse der Kupplungsanordnung 10 wird durch den Formschluss der Welle-Nabe-Verbindung verhindert.

In Fig. 2a sind auch gestrichelte Punktsymmetrielinien eingezeichnet, mit deren Hilfe die zwar punktsymmetrische jedoch nicht spiegelsymmetrische Anordnung der Profilelemente 11c, 11d und 21c, 21d erkennbar ist.

Fig. 2b zeigt die Wirkung der erfindungsgemäß ausgebildeten Welle-Nabe-Verbindung bei einer fehlerhaften Montage des Ausgangselements 11 im Hohlzylinder 21 in einer dreidimensionalen Darstellung. Der Hohlzylinder 21 ist in Fig. 2b mit dem vom axialen Endbereich 21a beabstandeten Bereich 21e nach oben dargestellt. An dieser Seite des Hohlzylinders 21 wird das Ausgangselement 11 bei der Montage axial zum Hohlzylinder 21 hin bewegt. Wie gut erkennbar ist, weist das Ausgangselement 11 in der Darstellung eine zur Einbaulage in Richtung der Achse um 180° verdrehte Ausrichtung auf, da die Stirnverzahnung 11a, die zum Zusammenwirken mit der Eingangswelle 2 vorgesehen ist, in die gleiche Richtung zeigt, wie der Bereich 21e des Hohlzylinders 21 und damitin der Einbaulage der beispielhaften Ausführungsform - in falscher Richtung zur Antriebseinrichtung hin.

Wie insbesondere an der Position des Pfeils am linken Rand des Ausgangselements 11 erkennbar ist, kann das Ausgangselement 11 in der dargestellten axialen Ausrichtung nicht in den Hohlzylinder 21 eingesetzt werden, da bei einer Ausrichtung eines Markierungsprofilelements 11d der Ausgangselements 11 im benachbart zum Markierungsprofilelement 21d des Hohlzylinders 21 angeordneten zweite Abstand a2, das Markierungsprofilelement 21d des Hohlzylinders 21 und der vierte Abstand a4, der an der Ausgangselement 11 zur Aufnahme des Markierungsprofilelements 21d ausgebildet sind, auf unterschiedlichen Seiten des Markierungsprofilelements 11d angeordnet sind. Ein Einsetzen des Ausgangselements 11 in den Hohlzylinder 21 ist in der dargestellten axialen Montageposition nicht möglich, folglich wird die fehlerhafte Ausrichtung des Ausgangselements 11 im Montageprozess erkannt, und kann entsprechend korrigiert werden.

**Fig. 2c** zeigt ein Detail der fehlerhaften Montage der Elemente in Fig. 2b in einer Draufsicht. In der Darstellung ist gut erkennbar, dass bei einer Ausrichtung eines Markierungsprofilelements 11d des Ausgangselements 11 im benachbart zum Markierungsprofilelement 21d des Hohlzylinders 21 angeordneten zweiten Abstand a2 ein Profilelement 11c axial am Markierungsprofilelement 21d anschlägt (Pfeil), während auf der gegenüberliegenden Seite des Markierungsprofilelements 11d des Ausgangselements 11 kein Profilelement 21c in den ersten Abstand a1 am Hohlzylinder 21 eingreift.

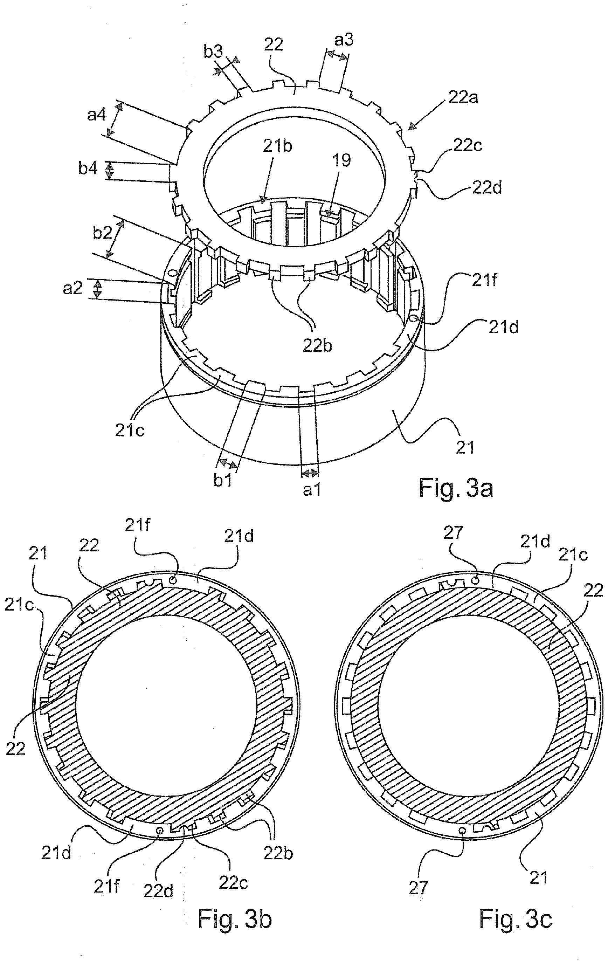

**Fig. 3a** zeigt eine beispielhafte erste ringförmige Anschlagscheibe 22 vor deren Montage in den Hohlzylinder 21 der Kupplungsanordnung 10 aus Fig. 1. Das am äußeren Umfang der ersten ringförmigen Anschlagscheibe 22 ausgebildete Keilwellenprofil 22a entspricht weitgehend dem am äußeren Umfang des Ausgangselements 11 ausgebildeten Keilwellenprofil 11b, so dass im Folgenden nur auf die Unterschiede dieser beiden Keilwellenprofile eingegangen wird.

Das Markierungsprofilelement 22c der ersten ringförmigen Anschlagscheibe 22 weist an seinem äußeren Umfang eine Aussparung 22d zur Aufnahme eines Befestigungselements 27 auf. Ferner weisen die Profilelemente 22b eine gegenüber den Profilelementen 11c des Ausgangselements 11 geringere Breite b3 und in gleicher Weise größere Abstände a3 auf, wohingegen die Breite b4 der Markierungsprofilelemente 22c und die benachbart dazu angeordnete Abstände a4 gegenüber dem Keilwellenprofil 11b des Ausgangselements 11 gleich sind. In Fig. 3a ist die im Hohlzylinder 21 umlaufend ausgebildete Nut 19 erkennbar, in welcher die erste ringförmige Anschlagscheibe 22 bei der Montage angeordnet und dort befestigt wird.

In **Fig. 3b** ist die erste ringförmige Anschlagscheibe 22 in einer Position gezeigt, in welcher diese - in der vorgesehenen axialen Ausrichtung - bereits unter Herstellung einer Welle-Nabe-Verbindung in den Hohlzylinder 21 eingesetzt wurde. Die zur Fig. 3a beschriebene abweichende Breite b3 bzw. der abweichende Abstand a3 zwischen den Profilelementen 22b ist in Fig. 3b gut anhand der Lücken zwischen den Profilelementen 21c und 22b erkennbar. Diese gegenüber dem Ausgangselement 11 geänderte Gestaltung des Keilwellenprofils 22a vereinfacht das Einsetzen der ersten ringförmigen Anschlagscheibe 22 in den Hohlzylinder 21. Da die Welle-Nabe-Verbindung zwischen der ersten ringförmigen Anschlagscheibe 22 und dem Hohlzylinder 21 nicht dafür vorgesehen ist, ein Drehmoment zwischen diesen Bauteilen zu übertragen, ist auch keine an jeder Flanke der Profilelemente 21c, 22b formschlüssige Gestaltung erforderlich. Ferner sind in Fig. 3b zwei in den Markierungsprofilelementen 21d angeordnete axial ausgerichtete Befestigungsbohrungen 21f ausgebildet, welche um 180° versetzt angeordnet sind. Die beiden Befestigungsbohrungen 21f weisen eine Länge auf, welche über die Breite der Nut 19 hinweg reicht, so dass der untere Bereich der Befestigungsbohrungen in den Markierungsprofilelementen 21d ausgebildet ist.

Fig. 3c zeigt die erste ringförmige Anschlagscheibe 22 in einer Montageposition in der umlaufenden Nut 19 im Hohlzylinder 21. Bei der Montage wird die erste ringförmige Anschlagscheibe 22 in der vorgesehenen Ausrichtung axial in den Hohlzylinder 21 eingesetzt und axial in die Nut 19 bewegt. Mittels einer Drehung, hier im Uhrzeigersinn, werden die Aussparungen 22d mit den Befestigungsbohrungen 21f ausgerichtet, so dass in die Befestigungsbohrungen 21f jeweils ein Befestigungselement 27, hierein Zylinderstift, eingebracht werden kann, um die Lage der Anschlagscheibe 22 gegenüber dem Hohlzylinder 21 zu fixieren. Durch die Lage der Profilelemente 22b und 22c in den durch die Nut 19 geschaffenen Aussparungen der Profilelemente 21c und 21d des Hohlzylinders 21 ist die erste ringförmige Anschlagscheibe 22 in axialer Richtung fest im Hohlzylinder gehalten, durch die in den Aussparungen 22d angeordneten Befestigungselemente 27 auch drehfest.

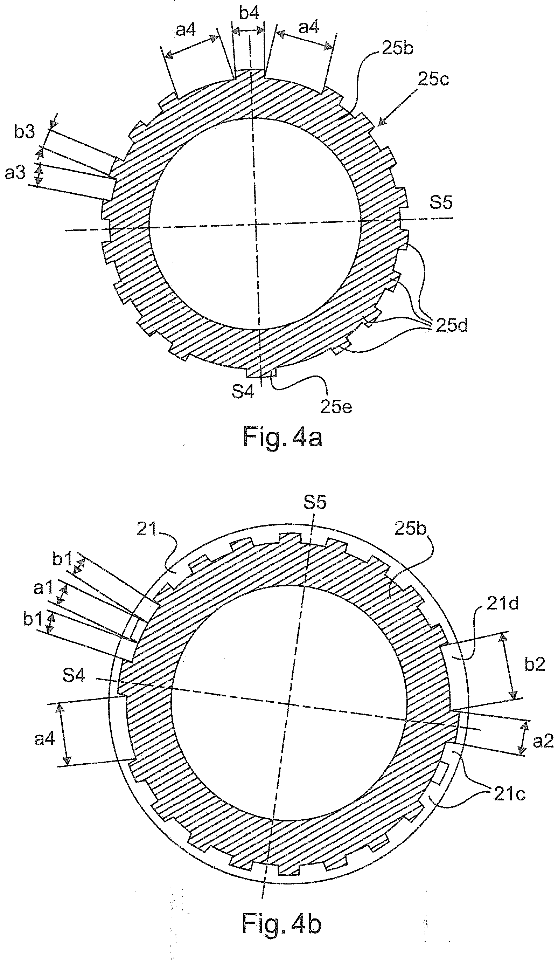

**Fig. 4a** zeigt ein beispielhaftes Reibelement 25b der zweiten Gruppe von Reibelementen 25b vor der Montage in den Hohlzylinder 21 der Kupplungsanordnung 10 aus Fig. 1. An beiden Seiten des Reibelements 25b sind gleiche Reibbeläge angeordnet, so dass das Reibelement 25b in jeder axialen Ausrichtung in der Kupplungsglocke 20 montiert werden kann, ohne die Funktion der Kupplungsanordnung 10 zu beeinträchtigen. Das am äußeren Umfang des Reibelements 25b ausgebildete Keilwellenprofil 25c entspricht weitgehend dem am äußeren Umfang des Ausgangselements 11 ausgebildeten Keilwellenprofil 11b, so dass im Folgenden nur auf die Unterschiede dieser beiden Keilwellenprofile eingegangen wird.

Das beispielhafte Reibelement 25b weist zwei um 180° zueinander versetzt angeordnete Markierungsprofilelemente 25e auf, welche in Umfangsrichtung eine von der dritten Breite b3 unterschiedliche vierte Breite b4 aufweisen. In beiden Umfangsrichtungen weisen die Markierungsprofilelemente 25e einen vierten Abstand a4 vom jeweils nächsten Profilelement 25d auf, der sich von dem dritten Abstand a3 zwischen der Vielzahl von sich radial nach außen erstreckenden Profilelementen 25d unterscheidet. Gegenüber einer durch die Mitte der beiden Markierungsprofilelemente 25e verlaufenden Symmetrieebene S4 ist das beispielhafte Reibelement 25b der zweiten Gruppe von Reibelementen 25b spiegelsymmetrisch ausgebildet, ebenso auch zu einer senkrecht hierzu durch die Mittelachse des Reibelements 25b angeordneten Symmetrieebene S5.

**Fig. 4b** zeigt das beispielhafte Reibelement 25b der zweiten Gruppe von Reibelementen 25b in seiner Montageposition im Hohlzylinder 21. Wie in dieser Darstellung gut erkennbar ist, entspricht der vierte Abstand a4 der Summe von zwei ersten Breiten b1 zweier Profilelemente 21c und einem ersten Abstand a1 des Keilnabenprofils 21b. Damit ist das Reibelement 25b in beiden axialen Ausrichtungen in den Hohlzylinder 21 einsetzbar und kann dabei jeweils um die Spiegelachsen S4 und S5 verschwenkt werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### BEZUGSZEICHENLISTE

- 1: Luftverdichter
- 2: Eingangswelle
- 3: Antriebsrad
- 4: Kupplungsaufnahme
- 5: Dehnschraube
- 6: Ringzylinder
- 10: Kupplungsanordnung
- 11: Ausgangselement
- 11a: Stirnverzahnung
- 11b: Keilwellenprofil des Ausgangselements
- 11c: Profilelement des Ausgangselements
- 11d: Markierungsprofilelement des Ausgangselements
- 12: Eingangselement
- 12a: Keilwellenprofil des Eingangselements
- 13: Nabe
- 19: Nut
- 20: Kupplungsglocke
- 21: Hohlzylinder
- 21a: axialer Endbereich
- 21b: Keilnabenprofil des Hohlzylinders
- 21c: Profilelement
- 21d: Markierungsprofilelement
- 21e: vom axialen Endbereich beabstandeter Bereich
- 21f: Befestigungsbohrung
- 22: erste ringförmige Anschlagscheibe
- 22a: Keilwellenprofil der ersten ringförmigen Anschlagscheibe
- 22b: Profilelement der ersten ringförmigen Anschlagscheibe
- 22c: Markierungsprofilelement der ersten ringförmigen Anschlagscheibe
- 22d: Aussparung
- 22e: Abstützbereich
- 23: zweite ringförmige Anschlagscheibe
- 23a: Keilwellenprofil an der zweiten ringförmigen Anschlagscheibe
- 24: Sicherungsring
- 25: Kupplungspaket
- 25a: erste Gruppe von Reibelementen
- 25b: zweite Gruppe von Reibelementen
- 25c: Keilwellenprofil des Reibelements
- 25d: Profilelement des Reibelements
- 25e: Markierungsprofilelement des Reibelements
- 26: Federanordnung
- 27: Befestigungselement
- 28: Finger
- 30: Betätigungseinrichtung
- 31: Ringkolben
- 33: Betätigungselement

## Patentansprüche

1. Kupplungsanordnung, insbesondere zum optionalen Verbinden eines Luftverdichters (1) mit einer Antriebseinrichtung, mit einer Kupplungsglocke (20), einem Eingangselement (12) und mit einem drehfest mit der Kupplungsglocke (20) verbundenen Ausgangselement (11), mit einem Kupplungspaket (25), das innerhalb der Kupplungsglocke (20) zwischen dem Eingangselement (12) und dem Ausgangselement (11) angeordnet ist, und mit einer Federanordnung (26), welche das Kupplungspaket (25) in einen geschlossenen Zustand beaufschlagt, in dem das Eingangselement (12) und das Ausgangselement (11) drehfest miteinander verbunden sind, **dadurch gekennzeichnet, dass** die Kupplungsglocke (20) einen Hohlzylinder (21) aufweist, der an seiner inneren Umfangsfläche mit einem Nabenprofil (21b) versehenen ist, und an dessen einem axialen Endbereich (21b) eine erste ringförmige Anschlagscheibe (22) fest verbunden angeordnet ist und an einem von dem axialen Endbereich (21b) beabstandeten Bereich (21e) eine zweite ringförmige Anschlagscheibe (23) fest verbunden angeordnet ist, wobei das Nabenprofil (21b) des Hohlzylinders (21) eine Vielzahl von sich radial nach innen erstreckende Profilelemente (21c) wie insbesondere Zähne oder Keile (21c) aufweist, welche jeweils eine in Umfangsrichtung gleiche erste Breite (b1) und gleichen ersten Abstand (a1) voneinander aufweisen, und wenigstens ein Markierungsprofilelement (21d), welches in Umfangsrichtung eine von der ersten Breite (b1) verschiedene zweite Breite (b2) aufweist und in Umfangsrichtung einen zweiten Abstand (a2) zu einem benachbart dazu angeordneten Profilelement (21c) aufweist, der sich von dem ersten Abstand (a1) zwischen der Vielzahl von sich radial nach innen erstreckenden Profilelemente (21c) unterscheidet.

2. Kupplungsanordnung nach Anspruch 1, **dadurch gekennzeichnet, dass** die zweite Breite (b2) größer ist als die erste Breite (b1) und der erste Abstand (a1) kleiner ist als der zweite Abstand (a2), oder dass die zweite Breite (b2) kleiner ist als die erste Breite (b1) und der erste Abstand (a1) größer ist als der zweite Abstand (a2).

3. Kupplungsanordnung nach Anspruch 1, **dadurch gekennzeichnet, dass** die zweite Breite (b2) größer ist als die erste Breite (b1) und der erste Abstand (a1) größer ist als der zweite Abstand (a2), oder dass die zweite Breite (b2) kleiner ist als die erste Breite (b1) und der erste Abstand (a1) kleiner ist als der zweite Abstand (a2).

4. Kupplungsanordnung nach einem der vorhergehenden Ansprüche, **dadurch gekennzeichnet, dass** das Nabenprofil (21b) des Hohlzylinders (21) zwei Markierungsprofilelemente (21d) mit in Umfangsrichtung zweiter Breite (b2) und zweiten Abstand (a2) zu einem jeweils in gleicher Umfangsrichtung benachbart dazu angeordneten Profilelement (21c) aufweist, wobei die beiden Markierungsprofilelemente (21d) in einem Bereich von 90° bis 240°, insbesondere um 180° zueinander versetzt am Umfang des Hohlzylinders (21) angeordnet sind.

5. Kupplungsanordnung nach einem der vorhergehenden Ansprüche, **dadurch gekennzeichnet, dass** die erste ringförmige Anschlagscheibe (22) an ihrem äußeren Umfang ein Wellenprofil (22a) mit einer Vielzahl von sich radial nach außen erstreckenden Profilelementen (22b) wie insbesondere Zähne oder Keile (22b) aufweist, welche jeweils eine in Umfangsrichtung gleiche dritte Breite (b3) und gleichen dritten Abstand (a3) voneinander aufweisen, und wenigstens ein Markierungsprofilelement (22c), welches in Umfangsrichtung eine von der dritten Breite (b3) verschiedene vierte Breite (b4) aufweist und in Umfangsrichtung einen vierten Abstand (a4) zu einem benachbart dazu angeordneten Profilelement (22b) aufweist, der sich von dem dritten Abstand (a3) zwischen der Vielzahl von sich radial nach außen erstreckenden Profilelementen (22b) unterscheidet, wobei die erste ringförmige Anschlagscheibe (22) im Hohlzylinder (21) beim Eingriff des Wellenprofils (22a) in das Nabenprofil (21b) axial bewegbar angeordnet ist.

6. Kupplungsanordnung nach Anspruch 5, **dadurch gekennzeichnet, dass** der Hohlzylinder (21) an dem einen axialen Endbereich (21a) eine in Umfangsrichtung verlaufende Nut (19) aufweist, deren Breite wenigstens der axialen Breite des Wellenprofils (22a) der ersten ringförmigen Anschlagscheibe (22) entspricht und deren Außendurchmesser wenigstens dem Außendurchmesser der ersten ringförmigen Anschlagscheibe (22) entspricht, so dass die erste ringförmige Anschlagscheibe (22) in dieser Nut (19) um die Drehachse der Kupplungsanordnung (10) gegenüber dem Hohlzylinder (21) drehbar ist.

7. Kupplungsanordnung nach Anspruch 6, **gekennzeichnet durch** wenigstens ein Befestigungsmittel (21f, 27), mit welchem die erste ringförmige Anschlagscheibe (22) drehfest in der in Umfangsrichtung verlaufenden Nut (19) im Hohlzylinder (21) befestigbar ist.

8. Kupplungsanordnung nach einem der vorhergehenden Ansprüche, **dadurch gekennzeichnet, dass** das Ausgangselement (11) an seinem äußeren Umfang ein Wellenprofil (11b) mit einer Vielzahl von sich radial nach außen erstreckenden Profilelementen (11c) wie insbesondere Zähne oder Keile (11c) aufweist, welche jeweils eine in Umfangsrichtung gleiche dritte Breite (b3) und gleichen dritten Abstand (a3) voneinander aufweisen, und wenigstens ein Markierungsprofilelement (11d), welches in Umfangsrichtung eine von der dritten Breite (b3) unterschiedliche vierte Breite (b4) aufweist und in Umfangsrichtung einen vierten Abstand (a4) zu einem benachbart dazu angeordneten Profilelement (11c) aufweist, der sich von dem dritten Abstand (a3) zwischen der Vielzahl von sich radial nach außen erstreckenden Profilelementen (11c) unterscheidet, wobei das Ausgangselement (11) im Hohlzylinder (21) beim Eingriff des Wellenprofils (11b) in das Nabenprofil (21b) drehfest und axial bewegbar angeordnet ist.

9. Kupplungsanordnung nach einem der vorhergehenden Ansprüche, mit wenigstens einem Reibelement (25b) einer zweiten Gruppe von Reibelementen (25b), das an seinem äußeren Umfang ein Wellenprofil (25c) mit einer Vielzahl von sich radial nach außen erstreckenden Profilelementen (25d) wie insbesondere Zähne oder Keile (25d) aufweist, welche jeweils eine in Umfangsrichtung gleiche dritte Breite (b3) und gleichen dritten Abstand (a3) voneinander aufweisen, und mit wenigstens einem Markierungsprofilelement (25e), welches in Umfangsrichtung eine von der dritten Breite (b3) unterschiedliche vierte Breite (b4) aufweist und welches in beiden Umfangsrichtungen einen vierten Abstand (a4) vom jeweils nächsten Profilelement (25d) aufweist, der sich von dem dritten Abstand (a3) zwischen der Vielzahl von sich radial nach außen erstreckenden Profilelementen (25d) unterscheidet, wobei das Reibelement (25b) im Hohlzylinder (21) beim Eingriff des Wellenprofils (25c) in das Nabenprofil (21b) drehfest und axial bewegbar angeordnet ist.

10. Kupplungsanordnung nach Anspruch 9, **dadurch gekennzeichnet, dass** der vierte Abstand (a4) der Summe von zwei ersten Breiten (b1) und einem ersten Abstand (a1) entspricht.

11. Kupplungsanordnung nach einem der Ansprüche 5 bis 10, **dadurch gekennzeichnet, dass** die vierte Breite (b4) kleiner ist als die dritte Breite (b3) und der dritte Abstand (a3) größer ist als der vierte Abstand (a4), oder dass die vierte Breite (b4) größer ist als die dritte Breite (b3) und der dritte Abstand (a3) kleiner ist als der vierte Abstand (a4).

12. Kupplungsanordnung nach einem der Ansprüche 5 bis 10, **dadurch gekennzeichnet, dass** die vierte Breite (b4) kleiner ist als die dritte Breite (b3) und der dritte Abstand (a3) kleiner ist als der vierte Abstand (a4), oder dass die vierte Breite (b4) größer ist als die dritte Breite (b3) und der dritte Abstand (a3) größer ist als der vierte Abstand (a4).

## Claims

1. A clutch arrangement, in particular for the optional connection of an air compressor (2) to a drive device, having a clutch bell (20), having an input element (12), having an output element (11) connected rotationally conjointly to the coupling bell (20), having a clutch pack (25) arranged inside the clutch bell (20) between the input element (12) and the output element (11) and having a spring arrangement (26) that applies pressure to the clutch pack (25) in a closed state in which the input element (12) and the output element (11) are connected rotationally conjointly together, **characterised in that** the coupling bell (20) has provided on its inner circumferential surface a hollow cylinder (21) with a hub profile (21b), that arranged at one axial end region (21b) of this hub profile (21b) is a permanently connected first annular guide washer (22) and that arranged in a region (21e) a certain distance from this axial end region (21b) is a permanently connected second annular guide washer (23), the hub profile of (21b) of the hollow cylinder (21) having a plurality of radially inward extending profile elements (21c) such as, in particular, teeth or wedges (21c), which each have a circumferentially identical first width (b1) and are an identical first distance (a1) from one and other, and have at least one marking profile element (21d) that has a second width (b2) that is circumferentially different from the first width (b1) and is circumferentially a second distance (a2) from an adjacent profile element (21c), this second distance (a2) being different from the first distance (a1) between the plurality of radially inward extending profile elements (21c).

2. A clutch arrangement according to claim 1, **characterised in that** the second width (b2) is larger than the first width (b1) and the first distance (a1) is smaller than the second distance (a2), or that the second width (b2) is smaller than the first width (b1) and the first distance (a1) is larger than the second distance (a2).

3. A clutch arrangement according to claim 1, **characterised in that** the second width (b2) is larger than the first width (b1) and the first distance (a1) is larger than the second distance (a2), or that the second width (b2) is smaller than the first width (b1) and the first distance (a1) is smaller than the second distance (a2).

4. A clutch arrangement according to any one of the preceding claims, **characterised in that** the hub profile (21b) of the hollow cylinder (21) has two marking profile elements (21d) with a circumferentially second width (b2) and is a second distance (a2) from a profile element (21c) that is adjacent to it in the same circumferential direction, the two marking profile elements (21d) being arranged on the circumference of the hollow cylinder (21) offset by 90° to 240°, in particular by 180°, in relation to one another. I

5. A clutch arrangement according to any one of the preceding claims, **characterised in that** the first annular guide washer (11) has on its outer circumference a wave profile (22) having a plurality of radially outward extending profile elements (22b) such as, in particular, teeth or wedges (22b), which each have a circumferentially identical third width (b3) and are an identical third distance (a3) from one and other, and having at least one marking profile element (22c) that has a fourth width (b4) that is circumferentially different from the third width (b3) and is circumferentially a fourth distance (a4) from an adjacent profile element (22b), this fourth distance (a4) being different from the third distance (a3) between the plurality of radially outward extending profile elements (11c), the first annular guide washer (22) being arranged in the hollow cylinder (21) such that it is able to move axially when the wave profile (11b) engages in the hub profile (21b).

6. A clutch arrangement according to claim 5, **characterised in that** the hollow cylinder (21) has in one axial end region (21a) a circumferentially running groove (19), the width of which corresponds at least to the axial width of the wave profile (22a) of the first annular guide washer (22) and the external diameter of which corresponds at least to the external diameter of the first annular guide washer (22) such that the first annular guide washer (11) can be rotated about the axis of rotation of the clutch arrangement (10) relative to the hollow cylinder (21) in this groove (19).

7. A clutch arrangement according to claim 6, **characterised by** at least one fastening means (21f, 27) by means of which the first annular guide washer (22) can be fastened rotationally conjointly in the circumferentially running groove (19) in the hollow cylinder (21).

8. A clutch arrangement according to any one of the preceding claims, **characterised in that** the output element (11) has on its outer circumference a wave profile (11b) having a plurality of radially outward extending profile elements (11c) such as, in particular, teeth or wedges (11c), which each have a circumferentially identical third width (b3) and are an identical third distance (a3) from one and other, and having at least one marking profile element (11d) that has a fourth width (b4) that is circumferentially different from the third width (b3) and is circumferentially a fourth distance (a4) from an adjacent profile element (11c), this fourth distance (a4) being different from the third distance (a3) between the plurality of radially outward extending profile elements (11c), the output element (11) being arranged rotationally conjointly in the hollow cylinder (21) such that it is able to move axially when the wave profile (11b) engages in the hub profile (21b).

9. A clutch arrangement according to any one of the preceding claims, having at least one friction element (25b) of a second group of friction elements (25b) that has on its outer circumference a wave profile (25c) having a plurality of radially outward extending profile elements (25d) such as, in particular, teeth or wedges (25d), which each have a circumferentially identical third width (b3) and are an identical third distance (a3) from one and other, and having at least one marking profile element (25e) that has a fourth width (b4) that is circumferentially different from the third width (b3) and is a fourth distance (a4) in both circumferential directions from the next profile element (25d), this fourth distance (a4) being different from the third distance (a3) between the plurality of radially outward extending profile elements (25d), the friction element (25b) being arranged rotationally conjointly in the hollow cylinder (21) such that it is able to move axially when the wave profile (25c) engages in the hub profile (21b).

10. A clutch arrangement according to claim 9, **characterised in that** the fourth distance (a4) corresponds to the sum of two first widths (b1) and one first distance (a1).

11. A clutch arrangement according to any one of claims 5 to 10, **characterised in that** the fourth width (b4) is smaller than the third width (b3) and the third distance (a3) is larger than the third distance (a4), or that the fourth width (b4) is larger than the third width (b3) and the third distance (a3) is smaller than the fourth distance (a4).

12. A clutch arrangement according to any one of claims 5 to 10, **characterised in that** the fourth width (b4) is smaller than the third width (b3) and the third distance (a3) is smaller than the third distance (a4), or that the fourth width (b4) is larger than the third width (b3) and the third distance (a3) is larger than the fourth distance (a4).

## Revendications

1. Système d'accouplement, notamment pour la liaison optionnelle d'un compresseur (1) d'air à un dispositif d'entraînement, comprenant une cloche (20) d'accouplement, un élément (12) d'entrée et un élément (11) de sortie solidaire en rotation de la cloche (20) d'accouplement, un paquet (25) d'accouplement, qui est disposé à l'intérieur de la cloche (20) d'accouplement entre l'élément (12) d'entrée et l'élément (11) de sortie, et un système (26) de ressort, auquel le paquet (25) d'accouplement est soumis à l'état fermé, dans lequel l'élément (12) d'entrée et l'élément (11) de sortie sont solidaires entre eux en rotation, **caractérisé en ce que** la cloche (20) d'accouplement a un cylindre (21) creux, qui est pourvu d'un profil (21b) de moyeu sur sa surface de pourtour intérieure et, à l'une de ses parties (21b) d'extrémité axiales, est relié fixement un disque (22) annulaire de butée et, à une partie (21e) à distance de la partie (21b) d'extrémité axiale, est relié fixement un deuxième disque (23) annulaire de butée, le profil (21b) de moyeu du cylindre (21) creux ayant une pluralité d'éléments (21c) profilés s'étendant vers l'intérieur radialement, comme notamment des dents ou des coins (21c), qui ont chacun une même première largeur (b1) dans la direction du pourtour et une même première distance (a1) entre eux, et au moins un élément (21d) profilé de repérage, qui a, dans la direction du pourtour, une deuxième largeur (b2) différente de la première largeur (b1) et qui a, dans la direction du pourtour, une deuxième distance (a2) à un élément (21c) profilé, qui en est voisin, qui est différente de la première distance (a1) entre la pluralité d'éléments (21c) profilés s'étendant vers l'intérieur radialement.

2. Système d'accouplement suivant la revendication 1, **caractérisé en ce que** la deuxième largeur (b2) est plus grande que la première largeur (b1) et la première distance (a1) est plus petite que la deuxième distance (a2) ou **en ce que** la deuxième largeur (b2) est plus petite que la première largeur (b1) et la première distance (a1) est plus grande que la deuxième distance (a2).

3. Système d'accouplement suivant la revendication 1, **caractérisé en ce que** la deuxième largeur (b2) est plus grande que la première largeur (b1) et la première distance (a1) est plus grande que la deuxième distance (a2) ou **en ce que** la deuxième largeur (b2) est plus petite que la première largeur (b1) et la première distance (a1) est plus petite que la deuxième distance (a2).

4. Système d'accouplement suivant l'une des revendications précédentes, **caractérisé en ce que** le profil (21b) de moyeu du cylindre (21) creux a deux éléments (21d) profilés de repérage ayant une deuxième largeur (b2) dans la direction du pourtour et une deuxième distance (a2) à un élément (21c) profilé, qui en est voisin, les deux éléments (21d) profilés de repérage étant disposés décalés l'un par rapport à l'autre sur le pourtour du cylindre (21) creux dans une plage de 90° à 240°, notamment de 180° l'un par rapport à l'autre.

5. Système d'accouplement suivant l'une des revendications précédentes, **caractérisé en ce que** le premier disque (22) annulaire de butée a, sur son pourtour extérieur, un profil (22a) ondulé ayant une pluralité d'éléments (22b) profilés s'étendant vers l'extérieur radialement, comme notamment des dents ou des coins (22b), qui ont chacun une même troisième largeur (b3) dans la direction du pourtour et une même troisième distance (a3) entre eux et au moins un élément (22c) profilé de repérage, qui a, dans la direction du pourtour, une quatrième largeur (b4) différente de la troisième largeur (b3) et, dans la direction du pourtour, une quatrième distance (a4) à un élément (22b) profilé, qui en est voisin, qui est différente de la troisième distance (a3) entre la pluralité d'éléments (22b) profilés s'étendant vers l'extérieur radialement, le premier disque (22) annulaire de butée du cylindre (21) creux étant monté mobile axialement lors de la pénétration du profilé (22a) ondulé dans le profilé (21b) de moyeu.

6. Système d'accouplement suivant la revendication 5, **caractérisé en ce que** le cylindre (21) creux a, sur la une partie (21a) d'extrémité axiale, une rainure (19), qui s'étend dans la direction du pourtour, dont la largeur correspond au moins à la largeur axiale du profilé (22a) ondulé du premier disque (22) annulaire de butée et dont le diamètre extérieur correspond au moins au diamètre extérieur du premier disque (22) annulaire de butée, de manière à ce que le premier disque (22) annulaire de butée puisse tourner dans cette rainure (19) par rapport au cylindre (21) creux autour de l'axe de rotation du système (10) d'accouplement.

7. Système d'accouplement suivant la revendication 6, **caractérisé par** au moins un moyen (21f, 27) de fixation, par lequel le premier disque (22) de butée annulaire peut être fixé, d'une manière solidaire en rotation, dans la rainure (19) s'étendant dans la direction du pourtour du cylindre (21) creux.

8. Système d'accouplement suivant l'une des revendications précédentes, **caractérisé en ce que** l'élément (11) de sortie a, sur son pourtour extérieur, un profil (11b) ondulé ayant une pluralité d'éléments (11c) profilés s'étendant vers l'extérieur radialement, comme notamment des dents ou des coins (11c), qui ont chacun une même troisième largeur (b3) dans la direction du pourtour et une même troisième distance (a3) entre eux, et au moins un élément (11d) profilé de repérage, qui a, dans la direction du pourtour, une quatrième largeur (b4) différente de la largeur (b3) et, dans la direction du pourtour, une quatrième distance (a4) à un élément (11c) profilé, qui en est voisin, qui est différente de la troisième distance (a3) entre la pluralité d'éléments (11c) profilés s'étendant vers l'extérieur radialement, l'élément (11) de sortie étant monté solidaire en rotation et mobile axialement dans le cylindre (21) creux lors de la pénétration du profil (11b) ondulé dans le profil (21b) du moyeu.

9. Système d'accouplement suivant l'une des revendications précédentes, comprenant au moins un élément (25b) de frottement d'un deuxième groupe d'éléments (25b) de frottement, qui a, sur son pourtour extérieur, un profil (25c) ondulé ayant une pluralité d'éléments (25b) profilés s'étendant vers l'extérieur radialement, comme notamment des dents ou des coins (25d), qui ont chacun une même troisième largeur (b3) et une même troisième distance (a3) entre eux dans la direction du pourtour, et comprenant au moins un élément (25e) profilé de repérage, qui a, dans la direction du pourtour, une quatrième largeur (b4) différente de la troisième largeur (b3) et qui a, dans les deux sens du pourtour, une quatrième distance (a4) à l'élément (25d) profilé respectivement voisin, qui est différente de la troisième distance (a3) entre la pluralité d'éléments (25d) profilés s'étendant vers l'extérieur radialement, l'élément (25b) de frottement étant monté solidaire en rotation et mobile axialement dans le cylindre (21) creux lors de la pénétration du profil (25c) ondulé dans le profil (2b) de moyeu.

10. Système d'accouplement suivant la revendication 9, **caractérisé en ce que** la quatrième distance (a4) correspond à la somme de deux premières largeurs (b1) et d'une première distance (a1).

11. Système d'accouplement suivant l'une des revendications 5 à 10, **caractérisé en ce que** la quatrième largeur (b4) est plus petite que la troisième largeur (b3) et la troisième distance (a3) est plus grande que la quatrième distance (a4) ou **en ce que** la quatrième largeur (b4) est plus grande que la troisième largeur (b3) et la troisième distance (a3) est plus petite que la quatrième distance (a4).

12. Système d'accouplement suivant l'une des revendications 5 à 10, **caractérisé en ce que** la quatrième largeur (b4) est plus petite que la troisième largeur (b3) et la troisième distance (a3) est plus petite que la quatrième distance (a4) ou **en ce que** la quatrième largeur (b4) est plus grande que la troisième largeur (b3) et la troisième distance (a3) est plus grande que la quatrième distance (a4).
